Europäisches Patentamt

European Patent Office

Office européen des brevets

(11) Veröffentlichungsnummer: **0 362 186**

**A2**

(12) **EUROPÄISCHE PATENTANMELDUNG**

(21) Anmeldenummer: **89890210.1**

(22) Anmeldetag: **07.08.89**

(51) Int. Cl.5: **C04B 35/46**

(30) Priorität: **30.09.88 AT 2421/88**

(43) Veröffentlichungstag der Anmeldung:
**04.04.90 Patentblatt 90/14**

(84) Benannte Vertragsstaaten:
**CH DE FR GB LI SE**

(71) Anmelder: **Maschinenfabrik Andritz**
**Actiengesellschaft**
**Statteggerstrasse 18**
**A-8045 Graz-Andritz(AT)**

(72) Erfinder: **Kladnig, Wolfgang Friedrich,**
**Dipl.-Ing.Dr.**
**Krottenbachstrasse 106/10/4**
**A-1190 Wien(AT)**

(74) Vertreter: **Köhler-Pavlik, Johann, Dipl.-Ing.**
**Margaretenplatz 5**
**A-1050 Wien(AT)**

(54) **Verfahren zur Herstellung von Aluminium-Titanat.**

(57) Bei einem Verfahren zur Herstellung von Aluminium-Titanat werden als Ausgangssubstanzen Aluminium und Titan in Form deren Lösungen in Flußsäure, Salpetersäure und/oder Mischungen derselben und/oder Mischungen von Flußsäure und Chlorwasserstoffsäure verwendet und gegebenenfalls unter Zugabe von anorganischen, wässrigen Aluminiumsalzlösungen wird durch einen gemeinsamen Sprühröstprozeß und anschließender Calzinierung hochwertiges Aluminium-Titanat-Pulver für die Keramikindustrie hergestellt.

EP 0 362 186 A2

## Die vorliegende Erfindung betrifft ein Verfahren zur Herstellung von Aluminium-Titanat.

Aluminium-Titanat, $Al_2TiO_5$, eine keramische Verbindung aus $Al_2O_3$ und $TiO_2$, ist ein für keramische Zwecke heute vielbeachtetes Ausgangsmaterial und wird industriell üblicherweise auf feststoffchemischem Weg, durch Reaktionssintern eines innig vermengten stöchiometrischen Gemenges der beiden Pulver hergestellt.

Derartige Herstellungsverfahren sind beispielsweise in der EP-0 036 052, EP-0 036 462, EP-0 036 868, der US-PS 2 776 896 oder der DDR-PS 29 794 beschrieben, wobei die bei diesem Verfahren angewendeten Temperaturen im Bereich bis über 1600°C mit sehr langen Calzinierzeiten in der Größenordnung von 10 bis 20 Stunden pro Charge angegeben sind.

Bei einem weiteren bekannten Verfahren erfolgt die Herstellung von Aluminium-Titanat auf naßchemischem Weg, und zwar mit dem sogenannten Sol-Gelprozeß aus den entsprechenden Alkoholaten bzw. Acetaten oder Citraten, wobei durch Präzipitation und anschließende Calzinierung die Verbindungsbildung erreicht wird. Dieser Weg muß jedoch als äußerst arbeitsaufwendig und kostspielig angesehen werden. Insbesondere verläuft die Verbindungsbildung äußerst kompliziert unter einer möglichen reversiblen Zerfallsreaktion im Bereich von 800 bis 1100°C.

Die Aufgabe der vorliegenden Erfindung liegt nun darin, ein Verfahren der eingangs genannten Art zu schaffen, welches bei niedrigen Temperaturen schnell und auf kontinuierlichem Weg arbeitet, und bei welchem durch eine ideale homogene und reaktive Ausgangsform der Elemente Aluminium und Titan durch eine rasche Reaktion ein innig gemischtes, feinpulveriges und sehr reaktives Gemisch von $Al_2O_3$ und $TiO_2$ hergestellt wird.

Diese Aufgabe wird bei einem Verfahren der eingangs genannten Art dadurch gelöst, daß als Ausgangssubstanzen Aluminium und Titan in Form deren Lösung in Flußsäure, Salpetersäure und/oder Mischungen derselben und/oder Mischungen von Flußsäure und Chlorwasserstoffsäure verwendet werden und durch einen gemeinsamen Sprühröstprozeß und anschließende Calzinierung Aluminium-Titanat in Form von Aluminium-Titanat-Pulver kontinuierlich hergestellt wird.

Ein wesentliches Merkmal des erfindungsgemäßen Verfahrens liegt darin, daß als Ausgangssubstanzen Beizlösungen aus der Titanmetall- und Aluminium-Beizerei verwendet und gemeinsam mit Flußsäure und/oder Salpetersäure und/oder Chlorwasserstoffsäure in einem vorgegebenen stöchiometrischen Verhältnis dem Sprühröstprozeß zugeführt werden.

Nach einem weiteren Merkmal des erfindungsgemäßen Verfahrens werden als Zusatz zu den Beizlösungen, Lösungen, die durch einen Löseprozeß von Titan- und Aluminiumschrott erzeugt werden, und/oder anorganische, wässerige Aluminiumsalzlösungen, insbesondere Aluminiumnitrat oder Aluminiumchlorid, in einem vorgegebenen stöchiometrischen Verhältnis zugegeben.

Schließlich ist als weiteres wesentliches Merkmal des erfindungsgemäßen Verfahrens vorgesehen, daß die beim Sprühröstprozeß im Temperaturbereich von 200 bis 500°C, vorzugsweise 400°C, entstehenden freien Säuren, wie Salpetersäure, Flußsäure und/oder Chlorwasserstoffsäure einzeln oder im Gasgemisch im Temperaturbereich von 0 bis 70°C vollständig wiedergewonnen werden.

Durch das erfindungsgemäße, industriell einsetzbare Verfahren wird eine besonders rasche Aluminium-Titanat-Bildung durch schnelles Erhitzen auf Temperaturen höher als 1300°C in Zeitintervallen von ungefähr 4 Stunden, oder bei höheren Temperaturen, wie 1500°C und darüber in Zeitintervallen von 2 Stunden erreicht. Mit dem erfindungsgemäßen Verfahren wird eine vollständige Aluminium-Titanat-Bildung, als Pulver vorliegend erreicht, welches sich vorzüglich zur Herstellung von Aluminium-Titanat-Keramik eignet. Die aus diesem Pulver hergestellte Keramik weist vorteilhafte mechanische Eigenschaften, wie hohe Druckfestigkeit, verbesserte Biegefestigkeit, hohe Sinterdichte sowie Temperaturwechselbeständigkeit auf, wobei ihre Verwendungsmöglichkeiten im chemischen Apparatebau als Auskleidungsmaterial, im Maschinenbau, im Ofenbau, sowie allgemein als Keramik für hohe Temperaturbeanspruchung und Druckfestigkeit liegen.

Ein weitere Vorteil des erfindungsgemäßen Verfahrens liegt darin, daß von Abfallösungen, wie sie beim Beizprozeß der Titan- und Aluminiumverarbeitung anfallen, ausgegangen werden kann, wobei die Reaktionslösung durch Zugabe von Aluminium- und/oder Titanschrott hergestellt und die beim Sprühröstprozeß notwendige Lösung rückgewonnen werden kann.

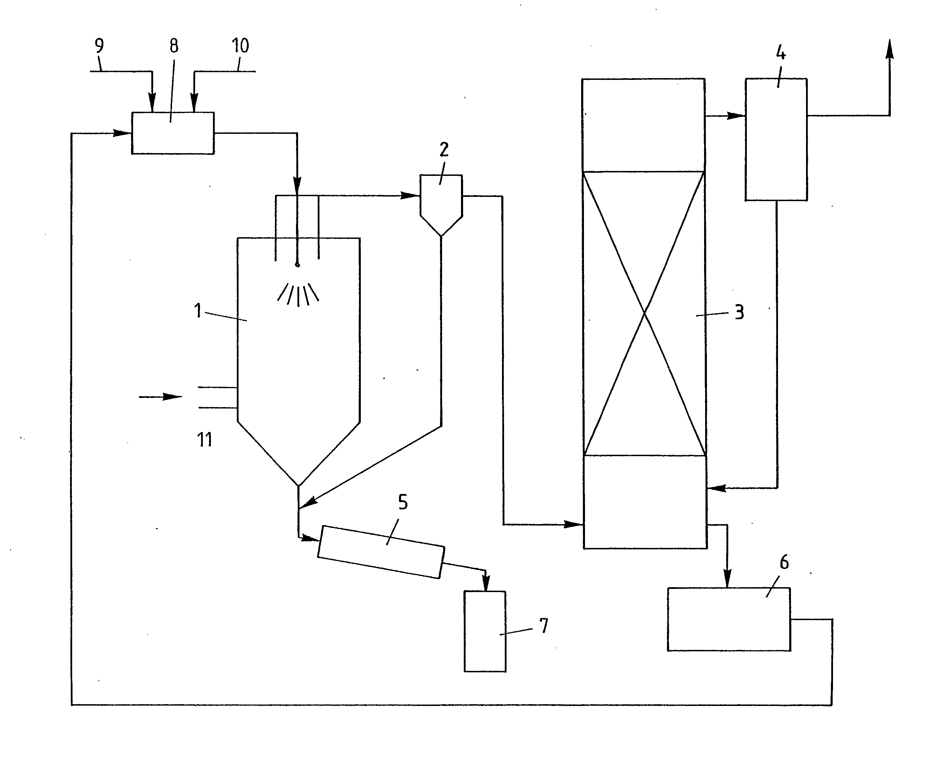

Weitere Merkmale und Einzelheiten des erfindungsgemäßen Verfahrens werden nun anhand der Zeichnung erläutert, welche schematisch eine Vorrichtung zur Durchführung des erfindungsgemäßen Verfahrens darstellt.

Das über die Leitungen 9 und 10 einer Lösestation, Schrottstation oder Beizerei 8 zugeführte Aluminium und Titan wird in Form deren Lösung in Flußsäure (HF), Salpetersäure ($HNO_3$) und/oder Mischungen derselben HF/$HNO_3$ und/oder Mischungen von Flußsäure und Chlorwasserstoffsäure (HCl) darauffolgend in einen Sprühröstreaktor 1 mittels Düsenstock (gegebenenfalls auch nach Reinigung mittels Solventextraktion) eingeleitet. Der Reaktor 1 steht mit einem Brenner 11 in Verbindung, welchem Brenngas, wie beispielsweise Methan, zugeführt wird.

Die als Lösungsmittel verwendeten Säuren $HNO_3$, HF und HCl, welche alle metallbeladen sind, sind üblicherweise im Verhältnis 1:1 bis 1:5 vorgesehen, worin auch das Aluminium gut lösbar ist.

Geeignete Ausgangslösungen fallen beim Beizen oder beim Auflösen von Metallspänen in den genannten Säuren aus Titan- und Aluminiummetall an. Weitere kann auch eine aus der Titanmetallbeizerei anfallende Beizsäure mit einem Aluminiumsalz, insbesondere Aluminiumnitrat, $Al_2(NO_3)_3$-hältige, oder Aluminiumchlorid, $AlCl_3$-hältige Lösungen, versetzt und dem Sprühröstprozeß unterzogen werden.

Durch gemeinsames Sprührösten (Co-Sprührösten) im Reaktor 1 wird eine besonders innige und damit reaktionsfähige Mischung der Elemente Aluminium und Titan erreicht, welche über einen Drehrohrofen 5 bei Temperaturen von 1300 bis 1600° C einem Pulver-Bunker 7 zugeführt wird, wobei durch einmalige Pulver-Calcinierung diese Mischung in die Aluminium-Titanat-Verbindung vollständig übergeht. Die Zersetzung der Säurelösung erfolgt bei Temperaturen von 200 bis 500° C, vorzugsweise 400° C. Insbesondere wird Aluminium-Titanat in dessen kristallographischer $\beta$-Modifikation, $\beta$-$Al_2TiO_5$ (Tialit), mit rhombisch-bipyramidaler Kristallstruktur mit einer Achsendimensionierung (kristallographische Gitterkonstanten) a = 3,59, b = 9,43, c = 9,64 hergestellt.

Das in die Gasphase übertretende Säuregemisch wird über einen zur Abscheidung des anfallenden Ofenoxids vorgesehenen Zyklon 2 in einen Absorber 3 geleitet, wo es aufgefangen und anschließend destillativ getrennt wird. Die derart wiedergewonnene Säurelösung läßt sich anschließend vermittels einer Lösesäurestation 6 als Lösesäure für eine weitere Herstellung von Ausgangslösungen verwenden.

Die chemische Ablauffolge des erfindungsgemäßen Verfahrens, sowie die dem Sprühröstprozeß folgende Kondensation/Absorption der in der Gasphase vorliegenden Säuregemische HF und $HNO_3$ stellt sich folgendermaßen dar:

1) $Al + HF + 3\ HNO_3 = Al_2(NO_3)_3 + HF + 3/2\ H_2$

2) $Ti + 4\ HF + HNO_3 = TiF_4 + 2\ H_2 + HNO_3$

3) $HF\ (aq) = HF\ (g)$

4) $HNO_3\ (aq) = NO_x\ (g) + O_2\ (g) + H_2O$

5) $NO_x\ (g) + H_2O = HNO_3$

6) $Al_2(NO_3)_3 + 3/2\ H_2O = Al_2O_3 + 3\ NO\ (NO_x)$

7) $TiF_4 + 2\ H_2O = TiO_2 + 4\ HF\ (g)$

Die als unerwünschtes Nebenprodukt bei der Nitratzersetzung anfallenden Stickoxide ($NO_x$) werden über einen Filter 4 aus dem Prozeß eliminiert.

Abschließend werden Ausführungsbeispiele des erfindungsgemäßen Verfahrens angeführt, welche weitere Merkmale, Vorteile und Ergebnisse dieses Verfahrens erläutern:

25g Al/l (0,85 mol/l) und 20,5g Ti/l (0,43 mol/l) werden in einem HF/$HNO_3$-Gemisch gelöst (2 mol/l HF und 2 mol/l $HNO_3$) und im Sprühröstreaktor mittels Düsenstock in der Heißgaszone bei einer Temperatur von 400° C zersetzt. Der Säurerückgewinnungsgrad betrug mehr als 90% an HF und $HNO_3$. Das nach einer Calcinierungsbehandlung gewonnene Aluminium-Titanat-Pulver war reinweiß und flockig, wobei das Schüttgewicht 0,35g/cm³, die spezifische Oberfläche nach dem BET-Verfahren 40 bis 50 m²/g und die Feuchte nur 2% $H_2O$ betrug. Die Korngrößenverteilung betrug 20 bis 22 $\mu$m (bei $d_{50}$), was einem feinen sprühgetrockneten Pulver entspricht. Das Pulver lag in der kristallographischen Phase Anatas ($TiO_2$), $Al_2O_3$, AlOOH und geringfügig $Al_2TiO_5$ vor.

Durch anschließendes Reaktionssintern bei einer Temperatur von 1350 bis 1500° C wurde 100% $Al_2TiO_5$ mit $\beta$-Struktur erhalten, wobei die Korngrößenverteilung wieder um 20 bis 22$\mu$m (bei $d_{50}$) betrug und die spezifische Oberfläche nach dem BET-Verfahren in der Größenordnung 2m²/g bis 4m²/g lag. Durch ein darauffolgendes Aufmahlen dieses sprühgetrockneten Tialit-Pulvers in einer Kugelmühle, ließ sich eine mittlere Korngrößenverteilung von 2 bis 6 $\mu$m erreichen.

Schließlich wurde die aus dem Tialit-Pulver hergestellte Keramik einem Sinter-Test unterzogen, wobei dieses Pulver mit einem Druck von 100 N/mm² bis 150 N/mm² gepreßt wurde. Die Tialit-Keramik wies eine Gründichte von 2,0 bis 2,1 und eine Sinterdichte von 2,9 bis 3,1 auf, wobei bei einer Temperatur von 1500° C gesintert wurde. Die Temperaturwechselbeständigkeit bei Temperaturen von 1500° C bis 20° C betrug mindestens 3.

## Ansprüche

1. Verfahren zur Herstellung von Aluminium-Titanat, dadurch gekennzeichnet, daß als Ausgangssubstanzen Aluminium und Titan in Form deren Lösung in Flußsäure, Salpetersäure und/oder Mischungen derselben und/oder Mischungen von Flußsäure und Chlorwasserstoffsäure verwendet werden und durch einen gemeinsamen Sprühröstprozeß und anschließende Calcinierung Aluminium-Titanat in Form von Aluminium-Titanat-Pulver kontinuierlich hergestellt wird.

2. Verfahren nach Anspruch 1, dadurch gekennzeichnet, daß als Ausgangssubstanzen Beizlösungen aus der Titanmetall- und Aluminium-Beizerei verwendet und gemeinsam mit Flußsäure und/oder Salpetersäure und/oder Chlorwasserstoffsäure in einem vorgegebenen stöchiometrischen Verhältnis dem Sprühröstprozeß zugeführt werden.

3. Verfahren nach den Ansprüchen 1 und 2, dadurch gekennzeichnet, daß als Zusatz zu den Beizlösungen, Lösungen, die durch einen Löseprozeß von Titan- und Aluminiumschrott erzeugt wurden, und/oder anorganischen, wässrigen Aluminiumsalzlösungen, insbesondere Aluminiumnitrat oder Aluminiumchlorid in einem vorgegebenen stöchiometrischen Verhältnis zugegeben werden.

4. Verfahren nach Anspruch 1, dadurch gekennzeichnet, daß die beim Sprühröstprozeß im Temperaturbereich von 200 bis 500 °C, vorzugsweise 400 °C, entstehenden freien Säuren, wie Salpetersäure, Flußsäure und/oder Chlorwasserstoffsäure einzeln oder im Gasgemisch im Temperaturbereich von 0 bis 70 °C vollständig wiedergewonnen werden.

EP 0 362 186 A2